# EUROPÄISCHE PATENTSCHRIFT

(11) **EP 1 828 623 B1**
(45) Veröffentlichungstag und Bekanntmachung des Hinweises auf die Patenterteilung: **11.02.2009**
(21) Anmeldenummer: 05798158.1
(22) Anmeldetag: 27.10.2005
(51) Int. Cl.: F16B 5/02

(54) **VORRICHTUNG ZUM BEFESTIGEN EINES ANBAUTEILS UND EINES TRÄGERTEILES IN EINEM ABSTAND VONEINANDER**
DEVICE FOR FASTENING AN ADD-ON AND A SUPPORT AT A DISTANCE FROM EACH OTHER
DISPOSITIF POUR FIXER UNE PIECE A RAJOUTER ET UN SUPPORT ESPACES L'UN DE L'AUTRE

(30) Priorität: 18.12.2004 DE 102004061087
(43) Veröffentlichungstag der Anmeldung: 05.09.2007
(73) Patentinhaber: A. RAYMOND ET CIE, 38000 Grenoble (FR)
(72) Erfinder: DE GELIS, Vincent, F- 38170 Seyssinet-Pariset (FR)
(74) Vertreter: Rüttgers, Joachim
(86) Internationale Anmeldenummer: PCT/EP2005/011506
(87) Internationale Veröffentlichungsnummer: WO 2006/063634

(56) Entgegenhaltungen:
- DE-U1- 20 119 112
- US-B1- 6 357 953
- US-B1- 6 826 878

## Beschreibung

Die Erfindung betrifft eine Vorrichtung gemäß dem Oberbegriff des Patentanspruches 1.

Eine derartige Vorrichtung ist aus US 6,357,953 B1 bekannt. Die gattungsgemäße Vorrichtung zum Befestigen eines Anbauteiles und eines Trägerteiles in einem Abstand voneinander verfügt über eine mit dem Trägerteil fest verbindbare Einbaumutter, die ein Innengewinde einer ersten Gangrichtung aufweist, und ist mit einer Ausgleichbuchse ausgebildet, die ein an das Innengewinde der Einbaumutter angepasstes Außengewinde aufweist. Die Ausgleichsbuchse ist in die Einbaumutter einschraubbar. Weiterhin ist eine mit einer einen Schraubenschaft aus einem harten Material aufweisende Befestigungsschraube zum Verbinden des Anbauteiles mit der Ausgleichsbuchse vorhanden, wobei der Schraubenschaft mit einem Außengewinde einer zu der ersten Gangrichtung entgegengesetzten zweiten Gangrichtung ausgebildet und in einen durch die Einbaumutter und in die Ausgleichsbuchse eingebrachten Schraubenkanal einführbar ist. Die Ausgleichsbuchse ist aus einem gegenüber dem Schraubenschaft weichen Material hergestellt und weist einen Kanalabschnitt auf, der einen Teil des Schraubenkanales bildet und dessen Innendurchmesser kleiner als der Außendurchmesser des Schraubenschaftes ist, so dass mit dem Außengewinde des Schraubenschaftes der Befestigungsschraube in den Kanalabschnitt der Ausgleichsbuchse ein Innengewinde einformbar sind.

Aus DE 201 19 112 U1 ist eine Vorrichtung bekannt, die über eine Einbaumutter verfügt, die fest mit einem Trägerteil verbindbar ist. Die Einbaumutter ist in einem ersten Abschnitt mit einem Innengewinde einer ersten Gangrichtung und in einem zweiten Abschnitt mit einem zweiten Innengewinde einer zu der ersten Gangrichtung entgegengesetzten zweiten Gangrichtung ausgebildet. Weiterhin verfügt die gattungsgemäße Vorrichtung über eine Ausgleichsbuchse, die über ein zu dem ersten Innengewinde der Einbaumutter komplementär ausgebildetes Außengewinde mit der ersten Gangrichtung verfügt, so dass die Ausgleichsbuchse in das erste Innengewinde der Einbaumutter einschraubbar ist. Die Ausgleichsbuchse ist an ihrem von der Einbaumutter wegweisenden Ende mit einem Antriebsmittel ausgebildet, um die Ausgleichsbuchse um eine bestimmte Länge in axialer Richtung über die Einbaumutter vorstehen zu lassen. Schließlich ist zum Befestigen eines Anbauteiles mit der Ausgleichsbuchse eine Befestigungsschraube vorhanden, die mit einem mit einem Außengewinde der zweiten Gangrichtung versehenen und komplementär zu dem zweiten Innengewinde der Einbaumutter ausgebildeten Schraubenschaft durch einen Schraubenkanal der Ausgleichsbuchse durchgreifend in das zweite Innengewinde der Einbaumutter einschraubbar ist. Zwar lassen sich mit dieser Vorrichtung ein Trägerteil und ein Anbauteil in einem bestimmten, beispielsweise einen Toleranzausgleich schaffenden Abstand miteinander verbinden, allerdings erweist sich die Handhabung und dabei insbesondere das Erfordernis des Herausdrehens der Ausgleichsbuchse in einem gesonderten Arbeitsschritt bei bestimmten Anwendungen als etwas umständlich.

Der Erfindung liegt die Aufgabe zugrunde, eine Vorrichtung der eingangs genannten Art anzugeben, die sich durch einen stabil in der Einbaumutter gelagerten Buchsenkörper auszeichnet.

Diese Aufgabe wird bei einer Vorrichtung der eingangs genannten Art erfindungsgemäß mit den kennzeichnenden Merkmalen des Patentanspruches 1 gelöst.

Durch den Eingriff des an der Einbaumutter ausgebildeten Ringbundes und der an der Ausgleichsbuchse ausgebildeten Bundaufnahme ergibt sich bei der erfindungsgemäßen Vorrichtung eine merkliche stabilisierende Wirkung.

Weitere zweckmäßige Ausgestaltungen der Erfindung sind Gegenstand der Unteransprüche.

Aus der nachfolgenden Beschreibung eines Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Darstellung eine Einbaumutter und eine über die Einbaumutter vorstehende Ausgleichs- buchse eines Ausführungsbeispieles einer erfindungsge- mäßen Vorrichtung,
- Fig. 2: in einem Längsschnitt das Ausführungsbeispiel gemäß Fig. 1 in einer Vormontagestellung, in der die Ausgleichs- buchse vollständig in die Einbaumutter eingeschraubt ist und eine Befestigungsschraube an der Ausgleichsbuchse ansetzt, und
- Fig. 3: in einem Längsschnitt das Ausführungsbeispiel gemäß Fig. 1 und Fig. 2 in einer Endmontagestellung, in der die Befestigungsschraube sowohl in die Ausgleichsbuchse als auch die Einbaumutter eingeschraubt ist.

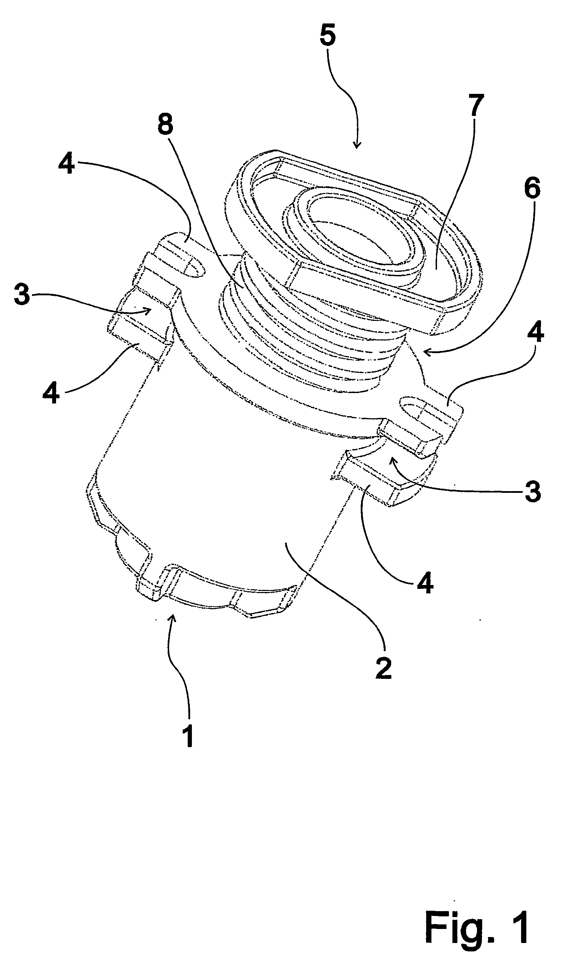

Fig. 1 zeigt in einer perspektivischen Darstellung ein Ausführungsbeispiel einer erfindungsgemäßen Vorrichtung, das eine Einbaumutter 1 mit einem im wesentlichen zylinderförmigen Mutterkörper 2 aus einem Kunststoff aufweist. An der Außenseite des Mutterkörpers 2 sind eine Anzahl beidseitig von Freiräumen 3 paarweise einander gegenüberliegender Anlagevorsprünge 4 ausgebildet, die radial nach außen vorstehen.

Weiterhin ist in Fig. 1 eine über die Einbaumutter 1 vorstehende Ausgleichsbuchse 5 dargestellt, die mit einem ebenfalls im wesentlichen zylinderförmigen Buchsenkörper 6 aus einem Kunststoff und einem an einem Ende des Buchsenkörpers 6 angeformten sowie radial über den Buchsenkörper 6 überstehenden Anlageteller 7 ausgebildet ist. An der Außenseite des Buchsenkörpers 6 ist ein Außengewinde 8 mit einer ersten Gangrichtung ausgebildet.

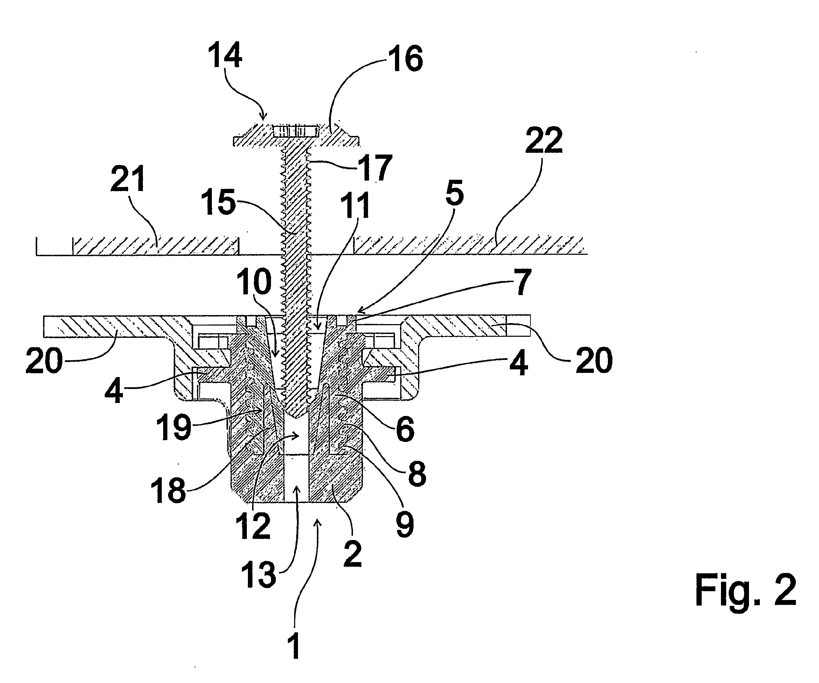

Fig. 2 zeigt in einem Längsschnitt das Ausführungsbeispiel gemäß Fig. 1 in einer Vormontagestellung, in der die Ausgleichsbuchse 5 mit ihrem Außengewinde 8 vollständig in ein Innengewinde 9 der Einbaumutter 1 eingeschraubt ist, das auf der Innenseite des Mutterkörpers 2 mit der ersten Gangrichtung und komplementär zu dem Außengewinde 8 des Buchsenkörpers 6 ausgebildet ist.

Aus Fig. 2 ist ersichtlich, dass die Vorrichtung mit einem sich axial durch den Buchsenkörper 6 der Ausgleichsbuchse 5 erstreckenden Schraubenkanal 10 ausgebildet ist, der in seinem dem Anlageteller 7 zugewandten Bereich einen sich von dem Anlageteller 2 wegweisend trichterförmig verjüngenden Einführabschnitt 11 und einen sich an den Einführabschnitt 11 anschließenden zylinderförmigen glattwandigen ersten Kanalabschnitt 12 aufweist.

Weiterhin ist Fig. 2 zu entnehmen, dass der Schraubenkanal 10 in Verlängerung des ersten Kanalabschnittes 12 durch einen in dem Mutterkörper 2 ausgebildeten, bei diesem Ausführungsbeispiel zur einfachen Herstellung ebenfalls zylinderförmigen glattwandigen zweiten Kanalabschnitt 13 in die Einbaumutter 3 verlängert und bei dem dargestellten Ausführungsbeispiel somit beidseitig offen ist.

Schließlich ist Fig. 2 zu entnehmen, dass die erfindungsgemäße Vorrichtung über eine Befestigungsschraube 14 mit einem Schraubenschaft 15 und mit einem Schraubenkopf 16 verfügt, wobei der Schraubenschaft 15 mit einem Außengewinde 17 mit einer zu der ersten Gangrichtung der zwischen der Einbaumutter 1 und der Ausgleichsbuchse 5 ausgebildeten Gewindeanordnung entgegengesetzten zweiten Gangrichtung ausgebildet ist. Die Befestigungsschraube 14 ist aus einem gegenüber den Materialien der Einbaumutter 1 und der Ausgleichsbuchse 5 härteren Material wie beispielsweise einem Metall hergestellt. Der Außendurchmesser des Schraubenschaftes 15 der Befestigungsschraube 14 ist größer als der Innendurchmesser sowohl des ersten Kanalabschnittes 12 als auch des zweiten Kanalabschnittes 13. In der in Fig. 2 dargestellten Anordnung setzt der Schraubenschaft 15 der Befestigungsschraube 14 an dem ersten Kanalabschnitt 12 an.

Bei dem dargestellten und erläuterten Ausführungsbeispiel einer erfindungsgemäßen Vorrichtung ist in dem Mutterkörper 2 ein sich von dem zweiten Kanalabschnitt 13 axial wegweisend erstreckender Ringbund 18 ausgebildet, der in der Anordnung gemäß Fig. 2 stabilisierend in eine in dem Buchsenkörper 6 ausgebildete komplementäre Bundaufnahme 19 eingreift.

In der in Fig. 2 dargestellten Vormontagestellung der erfindungsgemäßen Vorrichtung ist die Einbaumutter 1 mit ihrem Mutterkörper 2 in eine Ausnehmung eines Trägerteiles 20 eingefügt, deren Umrandung in die zwischen den Anlagevorsprüngen 4 ausgebildeten Freiräume 3 eingreift. Vorzugsweise erfolgt die drehfeste Verbindung zwischen der Einbaumutter 1 und dem Trägerteil 20 durch Kraft-und/oder Formschluss.

Die Befestigungsschraube 14 ist in der in Fig. 2 dargestellten Vormontagestellung durch eine in einem mit dem Trägerteil 20 in einem Abstand zu verbindenden Anbauteil 21 eingebrachte Ausnehmung durchgeführt, wobei der Schraubenkopf 16 in einem Abstand von dem Anbauteil 21 angeordnet ist.

Zu Beginn des Befestigungsvorganges wird die Befestigungsschraube 14 in der zweiten Gangrichtung des Außengewindes 17 gedreht, wobei dadurch in dem ersten Kanalabschnitt 12 ein Innengewinde eingeformt wird. Sobald der Widerstand beim Einformen des Innengewindes in den ersten Kanalabschnitt 12 größer als der Reibungswiderstand zwischen dem Außengewinde 8 der Ausgleichsbuchse 5 und dem Innengewinde 9 der Einbaumutter 1 ist, dreht sich die Ausgleichsbuchse 5 selbsttätig aus der Einbaumutter 1 heraus, bis der Anlageteller 7 an der dem Trägerteil 20 zugewandten Seite des Anbauteiles 21 anliegt und eine weitere axiale Bewegung der Ausgleichsbuchse 5 verhindert ist. Danach setzt sich der Vorgang des Einformens eines Innengewindes in den ersten Kanalabschnitt 12 fort.

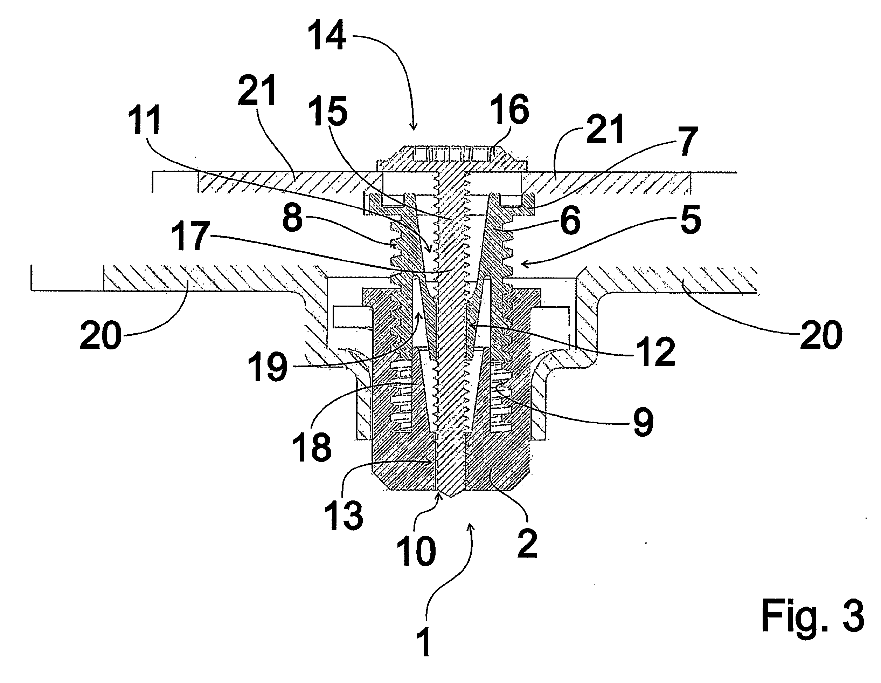

Fig. 3 zeigt in einem Längsschnitt das Ausführungsbeispiel gemäß Fig. 1 und Fig. 2 in einer Endmontagestellung, in der die Befestigungsschraube 14 sowohl in den in der Ausgleichsbuchse 5 ausgebildeten ersten Kanalabschnitt 12 als auch in den in der Einbaumutter 1 ausgebildeten zweiten Kanalabschnitt 13 ebenfalls unter Einformen eines weiteren Innengewindes eingeschraubt ist. In der Endmontagestellung ist der Ringbund 18 noch abschnittsweise stabilisierend mit der Bundaufnahme 19 in Eingriff. Dadurch ist die Ausgleichsbuchse 5 gegen Verdrehen gesichert, und das Anbauteil 21 ist in einem festen Abstand von dem Trägerteil 20 angeordnet und mit diesem verbunden.

## Patentansprüche

1. Vorrichtung zum Befestigen eines Anbauteiles (21) und eines Trägerteils (20) in einem Abstand voneinander mit einer mit dem Trägerteil (20) fest verbindbaren Einbaumutter (1), die ein Innengewinde (9) einer ersten Gangrichtung aufweist, mit einer Ausgleichsbuchse (5), die ein an das Innengewinde (9) der Einbaumutter (1) angepasstes Außengewinde (8) aufweist, wobei die Ausgleichsbuchse (5) in die Einbaumutter (1) einschraubbar ist, und mit einer einen Schraubenschaft (15) aufweisenden Befestigungsschraube (14) zum Verbinden des Anbauteiles (21) mit der Ausgleichsbuchse (5), wobei der Schraubenschaft (15) mit einem Außengewinde (17) einer zu der ersten Gangrichtung entgegengesetzten zweiten Gangrichtung ausgebildet und in einen durch die Einbaumutter (1) und in die Ausgleichsbuchse (5) eingebrachten Schraubenkanal (10) einführbar ist, wobei die Befestigungsschraube (14) aus einem gegenüber dem Material der Ausgleichsbuchse (5) härteren Material hergestellt ist und wobei die Ausgleichsbuchse (5) einen Kanalabschnitt (12) aufweist, der einen Teil des Schraubenkanales (10) bildet und dessen Innendurchmesser kleiner als der Außendurchmesser des Schraubenschaftes (15) ist, so dass mit dem Außengewinde (17) des Schraubenschaftes (15) der Befestigungsschraube (14) in den Kanalabschnitt (12) der Ausgleichsbuchse (5) ein Innengewinde einformbar ist, **dadurch gekennzeichnet, dass** die Ausgleichsbuchse (5) aus einem Kunststoff ist, dass die Einbaumutter (1) mit einem von ihrem Kanalabschnitt (12) axial in den Bereich ihres Innengewindes (9) vorstehenden Ringbund (18) ausgebildet ist, der in verschraubter Anordnung der Einbaumutter (1) und der Ausgleichsbuchse (5) mit einer in der Ausgleichsbuchse (5) komplementär ausgebildeten Bundaufnahme (19) in Eingriff ist.

2. Vorrichtung nach Anspruch 1, **dadurch gekennzeichnet, dass** die Einbaumutter (1) und die Ausgleichsbuchse (5) aus einem gegenüber dem Schraubenschaft (15) weichen Kunststoff hergestellt sind, wobei die Einbaumutter (1) einen Kanalabschnitt (13) aufweist, der einen Teil des Schraubenkanales (10) bildet und dessen Innendurchmesser kleiner als der Außendurchmesser des Schraubenschaftes (15) ist, so dass mit dem Außengewinde (17) des Schraubenschaftes (15) der Befestigurigsschraube (14) in den Kanalabschnitt (13) der Einbaumutter (1) ein Innengewinde einformbar ist.

3. Vorrichtung nach Anspruch 2, **dadurch gekennzeichnet, dass** die Kanalabschnitte (12,13) glattwandig ausgebildet sind.

4. Vorrichtung nach einem der Ansprüche 1 bis 3, **dadurch gekennzeichnet, dass** an dem von der Einbaumutter (1) wegweisenden Ende der Ausgleichsbuchse (5) ein Anlageteller (7) ausgebildet ist, der wenigstens abschnittsweise radial über das Außengewinde (8) der Ausgleichsbuchse (5) vorsteht.

5. Vorrichtung nach einem der Ansprüche 1 bis 4, **dadurch gekennzeichnet, dass** an der Einbaumutter (1) radial nach außen abstehende Anlagevorsprünge (4) ausgebildet sind.

## Claims

1. Device for fastening an add-on part (21) and a support part (20) at a distance from each other, comprising a mounting nut (1) which can be firmly connected to the support part (20) and has an internal thread (9) having a first thread direction, comprising a compensating bush (5) which has an external thread (8) matched to the internal thread (9) of the mounting nut (1), the compensating bush (5) being capable of being screwed into the mounting nut (1), and comprising a fastening screw (14) having a screw shank (15) and intended for connecting the add-on part (21) to the compensating bush (5), the screw shank (15) being formed with an external thread (17) having a second thread direction opposite to the first thread direction and being capable of being inserted into a screw channel (10) made through the mounting nut (1) and into the compensating bush (5), the fastening screw (14) being produced from a material which is harder than the material of the compensating bush (5), and the compensating bush (5) having a channel section (12) which forms a part of the screw channel (10) and the internal diameter of which is smaller than the external diameter of the screw shank (15) so that an internal thread can be formed with the external thread (17) of the screw shank (15) of the fastening screw (14) in the channel section (12) of the compensating bush (5), **characterized in that** the compensating bush (5) is made of a plastic and **in that** the mounting nut (1) is formed with an annular collar (18) which projects from its channel section (12) axially in the region of its internal thread (9) and, in the screwed-together arrangement of the mounting nut (1) and the compensating bush (5), engages a complementary collar receptacle (19) in the compensating bush (5).

2. Device according to Claim 1, **characterized in that** the mounting nut (1) and the compensating bush (5) are produced from a plastic which is softer than the screw shank (15), the mounting nut (1) having a channel section (13) which forms a part of the screw channel (10) and the internal diameter of which is smaller than the external diameter of the screw shank (15) so that an internal thread can be formed with the external thread (17) of the screw shank (15) of the fastening screw (14) in the channel section (13) of the mounting nut (1).

3. Device according to Claim 2, **characterized in that** the channel sections (12, 13) have smooth walls.

4. Device according to any of Claims 1 to 3, **characterized in that** a contact disc (7) which projects at least in sections radially above the external thread (8) of the compensating bush (5) is formed at that end of the compensating bush (5) which points away from the mounting nut (1).

5. Device according to any of Claims 1 to 4, **characterized in that** contact projections (4) projecting radially outwards are formed on the mounting nut (1).

## Revendications

1. Dispositif d'assemblage d'un élément rapporté (21) et d'un élément faisant office de support (20) en respectant entre ceux-ci un certain intervalle d'écartement, avec un écrou de montage (1) qui est destiné à être raccordé à demeure à l'élément faisant office de support (20), qui comporte un filetage femelle (9) dont le pas est orienté dans une première direction, muni d'une douille de compensation (5) qui comporte un filetage mâle adapté au filetage femelle (9) de l'écrou de montage (1), la douille de compensation (5) étant en l'occurrence destinée à se visser dans l'écrou de montage (1), et d'une vis de fixation (14) comprenant une tige filetée (15) pour assurer le raccordement de l'élément rapporté (21) à la douille de compensation (5), la tige filetée (15) comportant en l'occurrence un filetage mâle (17), dont le pas est orienté dans une deuxième direction opposée à la première orientation de pas et qui est destinée à être introduite dans un passage pour vis (10) ménagé dans l'écrou de montage (1) et dans la douille de compensation (5), la vis de fixation (14) étant en l'occurrence réalisée à partir d'une matière plus dure que la matière constitutive de la douille de compensation (5), et la douille de compensation (5) comprenant en l'occurrence une portion formant passage (12), qui constitue une partie du gabarit de passage fileté (10) et dont le diamètre intérieur est plus petit que le diamètre extérieur de la tige filetée (15), ce qui fait qu'il est possible de façonner un filetage femelle dans la portion définissant un gabarit de passage (12) de la douille de compensation (5), au moyen du filetage extérieur (17) de la tige filetée (15) de la vis de fixation (14), **caractérisé en ce que** la douille de compensation (5) est réalisée en matière plastique, **en ce que** l'écrou de montage (1) est muni d'un épaulement annulaire (18) faisant axialement saillie, depuis sa portion définissant un gabarit de passage (12), dans la zone correspondant à son filetage intérieur (9), qui, lorsque l'écrou de montage (1) et la douille de compensation (5) sont vissés ensemble, est en prise d'engagement avec un logement pour épaulement (19), présentant avec celui-ci une correspondance d'accouplement, ménagé dans la douille de compensation (5).

2. Dispositif selon la revendication 1, **caractérisé en ce que** l'écrou de montage (1) et la douille de compensation (5) sont réalisés dans une matière plastique plus tendre que la matière constitutive de la tige filetée (15), l'écrou de montage (1) comportant en l'occurrence une portion formant passage (13), qui constitue une portion du gabarit de passage fileté (10) et dont le diamètre intérieur est plus petit que le diamètre extérieur de la tige filetée (15), ce qui fait qu'il est possible de façonner un filetage femelle dans la portion formant passage (13) de l'écrou de montage (1) au moyen du filetage mâle (17) de la tige filetée (15) de la vis de fixation (14).

3. Dispositif selon la revendication 2, **caractérisé en ce que** les portions formant passages (12, 13) présentent des parois lisses.

4. Dispositif selon l'une des revendications 1 à 3, **caractérisé en ce que** la douille de compensation (5) comporte, au niveau de son extrémité allant en s'éloignant de l'écrou de montage (1), une collerette d'appui (7) qui fait saillie, au moins partiellement, dans le plan radial au-dessus du filetage mâle (8) de la douille de compensation (5).

5. Dispositif selon l'une des revendications 1 à 4, **caractérisé en ce que** l'écrou de montage (1) comporte des protubérances d'assise (4) faisant saillie vers l'extérieur dans le plan radial.
